Europäisches Patentamt

European Patent Office

Office européen des brevets

(19)

(11) **EP 1 275 692 A1**

(12) **EUROPEAN PATENT APPLICATION**

(43) Date of publication:
**15.01.2003 Bulletin 2003/03**

(51) Int Cl.[7]: **C08L 23/28**, B60C 1/00

(21) Application number: **02013582.8**

(22) Date of filing: **20.06.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **13.07.2001 JP 2001214146**

(71) Applicant: **THE YOKOHAMA RUBBER CO., LTD.**
**Tokyo 105-8685 (JP)**

(72) Inventors:
• **Arakawa, Kazuo,**
**The Yokohama Rubber Co., Ltd.**
**Hiratsuka-shi, Kanagawa (JP)**

• **Kanenari, Daisuke,**
**The Yokohama Rubber Co., Ltd.**
**Hiratsuka-shi, Kanagawa (JP)**
• **Chino, Keisuke, The Yokohama Rubber Co., Ltd.**
**Hiratsuka-shi, Kanagawa (JP)**

(74) Representative: **HOFFMANN - EITLE**
**Patent- und Rechtsanwälte**
**Arabellastrasse 4**
**81925 München (DE)**

(54) **Thermoplastic elastomer composition**

(57) A modified halogenated rubber wherein at least 5% of a halogen portion of the halogenated rubber is substituted with (i) a chain polymer having a carboxyl group or amino group at the end thereof and having a weight average molecular weight of at least 1000 or (ii) a non-polymer compound having a carboxyl group or amino group and having intermolecular interaction and a thermoplastic elastomer composition containing the same as a dispersed phase, together with a thermoplastic resin as a continuous phase.

EP 1 275 692 A1

**Description**

BACKGROUND OF THE INVENTION

1. Field of Invention

The present invention relates to a modified halogenated rubber, a thermoplastic elastomer composition containing the same as a dispersed phase, and a pneumatic tire using the composition as an air barrier layer.

2. Description of the Related Art

A thermoplastic elastomer composition having a thermoplastic resin component as a continuous phase, having an elastomer component as a dispersed phase and having at least part of the elastomer component cross-linked (or vulcanized) is known in the art as a composition having a rubbery elasticity function arising from the partially cross-linked elastomer component and capable of being thermoplastically shaped at a high temperature where it melts and flows due to the thermoplastic resin component forming the continuous phase. That is, a thermoplastic elastomer composition having such a dispersed structure has the feature capable of being shaped by processing techniques similar to those of plastics, while maintaining the properties of the vulcanized rubber.

Compared with a vulcanized rubber, an elastomer composition has the advantages that it does not require a vulcanization step, the products and the scraps formed during the molding or shaping can be recycled, and the reduction of weight is possible. In particular, a thermoplastic elastomer composition wherein the elastomer component forming the dispersed phase is cross-linked (or vulcanized), that is, dynamically cross-linked (or vulcanized), at least partly or entirely with the thermoplastic resin forming the continuous phase can give a product superior particularly in the mechanical physical properties as a rubber elastomer, compression set resistance, oil resistance, etc. In application, it may be applied to auto parts, construction materials, medical devices, general industrial materials, etc. in addition to conventional rubber applications.

The applicant previously developed a tire-use polymer composition superior in the balance of air barrier property and flexibility as a tire-use polymer composition, and achieving a reduced weight of the tire, comprising a specific amount of a thermoplastic resin having an air permeation coefficient at 30°C of not more than $25 \times 10^{-12}$ cm$^3$•cm/cm$^2$•sec•cmHg and a Young's modulus of more than 500 MPa and a specific amount of an elastomer component having an air permeation coefficient at 30°C of more that $25 \times 10^{-12}$ cm$^3$•cm/cm$^2$•sec•cmHg and a Young's modulus of not more than 500 MPa, and having an air permeation coefficient at 30°C of not more than $25 \times 10^{-12}$ cm$^3$•cm/cm$^2$•sec•cmHg and a Young's modulus of 1 to 500 MPa (Japanese Unexamined Patent Publication (Kokai) No. 8-25741).

When using the above polymer composition as an air permeation preventive layer such as an inner liner, etc. of a pneumatic tire, there is the problem that the adhesion thereof to the rubber layer is not sufficient in the case of only the thermoplastic elastomer composition. Further, the applicant engaged in research to further improve the air permeation preventive property in the tire-use polymer composition and developed a tire-use thermoplastic resin composition integrally forming an air barrier layer by utilizing the fact that, in the process of extruding a blend of at least two incompatible thermoplastic resins, one thermoplastic resin component in the thermoplastic resin, due to its incompatibility, does not finely disperse due to the shear stress at the time of extrusion molding, but disperses flatly in an oriented manner (Japanese Unexamined Patent Publication (Kokai) No. 8-244402).

When using the above thermoplastic resin composition as an air permeation preventive layer of a pneumatic tire, since it is a thermoplastic resin composition, it can give a sufficient air permeation preventive property, but when used in an extremely low temperature area, the flexibility and the durability with respect to flexing fatigue are sometimes insufficient.

SUMMARY OF INVENTION

Accordingly, the objects of the present invention are, in consideration of the current state of the above prior art and in answer to the demands of industry, to provide a functional thermoplastic elastomer composition imparting a superior low temperature durability in addition to the inherent properties of a thermoplastic elastomer composition and to provide a pneumatic tire using this as an air permeation preventive layer.

In accordance with the present invention, there is provided a modified halogenated rubber wherein at least 5% of a halogen portion of the halogenated rubber is substituted with (i) a chain polymer having a carboxyl group or amino group at the end thereof and having a weight average molecular weight of at least 1000 or (ii) a non-polymer compound having a carboxyl group or amino group and having intermolecular interaction.

In accordance with the present invention, there are also provided a thermoplastic elastomer composition comprising (A) the above modified halogenated rubber as a dispersed phase and (B) a thermoplastic resin as a continuous phase, wherein an amount of the modified halogenated rubber (A) is at least 50% by weight of the total weight of the components (A) and (B) and a pneumatic tire using the same as an air permeation preventive layer.

DESCRIPTION OF THE PREFERRED EMBODIMENT

The modified halogenated rubber used as a dispersed phase (i.e., domain) in the thermoplastic elastomer composition of the present invention has conventionally been obtained by substituting at least 5%, preferably at least 10%, more preferably 30 to 50% of the halogen portion of a known halogenated rubber, for example, a rubber obtained by charging a halogen gas into a diene-based rubber to introduce a halogen (bromine, chlorine, etc.) by an addition reaction with (i) a chain polymer having a carboxyl group or amino group at the end thereof, specifically, a carboxylated polyolefin or carboxylated diene-based rubber obtained by adding an acid anhydride followed by ring opening and then carboxylation, or a polyamide-based resin, polyester-based resin, polyurethane, polyurea, etc., and having a weight average molecular weight of at least 1000, preferably 5000 to 10,000 or (ii) a non-polymer compound having a carboxyl group or amino group and having intermolecular interaction (e.g., hydrogen bond, ionic interaction, or ionic bond).

To give the hydrogen bondability, a heterocyclic compound is reacted with the halogen positions. In general, all heterocyclic compounds are effective. As the heterocycle, a 5-member ring or 6-member ring is preferable. Further, pyridine or triazole is preferable. Specifically, 2-(or 4-)aminopyridine, 3-amino-1,2,4-triazole, 3-hydroxy-1,2,4-triazole, 2-hydroxylpyrimidine, 2-aminopyrimidine, 2-hydroxytriazine, 2-aminotriazine, 2-aminopyrazine, 2-hydroxypyrazine, 6-aminopurine, 6-hydroxypurine, etc. may be mentioned.

To enhance the ionic interaction, a long chain alkylamine is reacted with the halogen positions. Specifically, methylamine, ethylamine, propylamine, butylamine, pentylamine, hexylamine, heptylamine, octylamine, nonylamine, decylamine, undecylamine, dodecylamine, tridecylamine, tetradecylamine, pentadecylamine, cetylamine, stearylamine, etc. may be mentioned.

To enhance the ionic bondability, a metal carboxylate is introduced into the halogen positions. This is obtained by modifying the halogen positions to a carboxylic acid, then converting the carboxylic acid portion to a metal salt. Specifically, sodium carboxylate, potassium carboxylate, etc. may be mentioned.

As the halogenated rubber, for example, halogenated isobutylene-isoprene rubber, halogenated copolymer of an isomonoolefin and p-alkylstyrene, particularly halogenated copolymer of isobutylene-p-methylstyrene, halogenated olefin-based rubber, halogenated diene-based rubber, etc. may be mentioned. By substituting at least 5% of the halogen portion of the halogenated rubber with the chain polymer (A) or the non-polymer compound (B), the viscosity of the halogenated rubber is increased. Due to the pseudo cross-linked structure at a low temperature, a high elasticity, high breaking properties and high compression properties are exhibited.

In the present invention, the modified halogenated rubber (A) is finely dispersed (e.g., mean dispersed particle size 0.1 to 5 μm) in the continuous phase (i.e., matrix) of the thermoplastic resin (B) as a dispersed phase (i.e., domain) of the thermoplastic elastomer composition. The rubber component forming the dispersed phase may suitably contain, if necessary, a cross-linking agent (e.g., sulfur, peroxide, basic metal oxide, diamine compound, phenol resin, etc.), a vulcanization aid, zinc oxide, or other agents (e.g., softening agent, anti-aging agent, and processing aid) generally formulated thereinto for improving the dispersion, heat resistance, etc.

As the thermoplastic resin (B) used for the thermoplastic elastomer composition of the present invention, for example, a polyamide-based resin (e.g., Nylon 6 (N6), Nylon 66 (N66), Nylon 46 (N46), Nylon 11 (N11), Nylon 12 (N12), Nylon 610 (N610), Nylon 612 (N612), Nylon 6/66 copolymer (N6/66), Nylon 6/66/610 copolymer (N6/66/610), Nylon MXD6 (MXD6), Nylon 6T, Nylon 6/6T copolymer, Nylon 66/PP copolymer, Nylon 66/PPS copolymer), a polyester-based resin (e.g., polybutylene terephthalate (PBT), polyethylene terephthalate (PET), polyethylene isophthalate (PEI), PET/PEI copolymer, polyarylate (PAR), polybutylene naphthalate (PBN), liquid crystal polyester, polyoxyalkylene diimidic acid/polybutyrate terephthalate copolymer, and other aromatic polyesters), a polynitrile-based resin (e.g., polyacrylonitrile (PAN), polymethacrylonitrile, acrylonitrile/styrene copolymer (AS), methacrylonitrile/styrene copolymer, methacrylonitrile/styrene/butadiene copolymer), a polymethacrylate-based resin (e.g., polymethyl methacrylate (PMMA), polyethyl methacrylate), polyvinyl-based resin (e.g., vinyl acetate (EVA), polyvinyl alcohol (PVA), vinyl alcohol/ethylene copolymer (EVOH), polyvinylidene chloride (PVDC), polyvinyl chloride (PVC), vinyl chloride/vinylidene chloride copolymer, vinylidene chloride/methyl acrylate copolymer), a cellulose-based resin (e.g., cellulose acetate, cellulose acetobutyrate), a fluororesin (e.g., polyvinylidene fluoride (PVDF), polyvinyl fluoride (PVF), polychlorofluoroethylene (PCTFE), tetrafluoroethylene/ethylene copolymer (ETFE)), an imide-based resin (e.g., aromatic polyimide (PI)), etc. may be mentioned.

As a preferable thermoplastic resin (B) of the thermoplastic elastomer composition of the present invention, a nylon resin having a melting point of 170 to 230°C, for example, Nylon 6 (N6), Nylon 11 (N11), Nylon 12 (N12), Nylon 6/66 copolymer (N6/66), Nylon 610 (N610), Nylon 612 (N612), etc. may be mentioned.

The amount of the modified halogenated rubber (A) dispersed as a dispersed phase in the continuous phase of the thermoplastic resin component (B) according to the present invention is not particularly limited, but higher is preferable in order to improve the durability at low temperature. Specifically, the amount of the component (A) is at least 50% by weight, preferably at least 55% by weight, more preferably 60 to 65% by weight, based upon the total amount of the components (A) and (B). According to the present invention, the elastomer composition exhibits a higher melt viscosity at a high temperature, compared with the unmodified halogenated rubber, and exhibits high breaking properties because of a pseudo cross-linked structure at a low temperature. Since the viscosity at a high temperature is high, there are also the effects that an increase of the amount of rubber formulated in the blend with the thermoplastic resin becomes possible, the thermoplastic elastomer composition obtained by the increase in the amount of rubber blended is superior in low temperature properties, and the surface tension is decreased and the dispersed phase size is reduced by selecting the chain molecule having a high compatibility with the thermoplastic resin blended for the side chain.

The thermoplastic resin forming the matrix of the thermoplastic elastomer composition may suitably contain therein, if necessary, a plasticizer, softening agent, filler, reinforcing agent, processing aid, stabilizer, anti-oxidant, etc. generally formulated thereinto to improve the processability, dispersion, heat resistance, oxidation resistance, etc.

In the present invention, the method of producing the thermoplastic elastomer composition having the elastomer (A) finely dispersed in the matrix resin (B) is not particularly limited, but for example the composition may be produced as follows. That is, first, the elastomer component and the compounding agent are mixed in advance by a kneader, Bambury mixer, etc. until a uniformly mixed state is obtained to thereby prepare the elastomer composition (A). At this time, suitable amounts of carbon black, oil, or a filler such as calcium carbonate etc. may be added to the elastomer composition. Further, if necessary, it is also possible to add a vulcanization agent or cross-link agent, vulcanization aid, vulcanization accelerator, etc. for the elastomer.

The elastomer composition (A) and the matrix resin composition (B) produced in this way are charged into a twin-screw extruder etc. for melt mixing. When using an elastomer composition containing no cross-linking agents for the elastomer composition (A), the cross-linking agents are added at the stage where mixing has been sufficiently performed, then further mixing is performed to cause the elastomer composition to be dynamically cross-linked and obtain the desired thermoplastic elastomer composition.

Further, various compounding agents for the thermoplastic resin component or elastomer component may be previously mixed before the above twin-screw mixing step, but they may also be added during the above twin-screw mixing step. As the conditions of the mixing of the elastomer composition (A) and matrix resin composition (B) and melting and mixing in the dynamic vulcanization of the elastomer composition, the temperature should be at least higher than the melting point of the thermoplastic resin. Further, a shear rate at mixing of 500 to 7500 sec$^{-1}$ is preferable. A mixing time of 30 seconds to about 10 minutes is preferable.

If the thermoplastic elastomer composition thus obtained is shaped to a sheet, film, or tube using a T-shaped sheeting die, tubing die having a straight or cross head structure, cylindrical die for inflation molding, etc. with a single-screw extruder, it is possible to use this for a rubber/resin laminate of an air permeation preventive layer of a pneumatic tire, a hose, etc. Note that the thermoplastic elastomer composition thus obtained may be taken up once as strands, pelletized, then shaped by the single-screw extruder.

The sheet-shaped or tube-shaped article obtained in this way is comprised of a thermoplastic elastomer resin controlled in the morphology of the rubber elastomer/matrix resin blend of the present invention and having a phase structure of a state where the vulcanized rubber is finely dispersed in the matrix resin, and therefore, the thin film has a high durability at low temperature. By making the resin finely dispersed in the matrix resin one superior in gas permeation preventive property, the film can be made to have durability at low temperature and have a superior gas permeation preventive property, so it is possible to effectively use this for an air permeation preventive layer of a pneumatic tire or a hose tube or hose cover of a low gas permeability hose.

EXAMPLES

The present invention will now be explained more detail by the following Examples and Comparative Examples, but of course the present invention is not limited to the following Examples.

Examples 1 to 3 and Comparative Example 1

A thermoplastic elastomer composition was produced by using a halogenated rubber and modified halogenated rubber of the Examples shown in the following Table I.

Halogenated rubber (Br-IPMS): Exxpro 89-4 (i.e., brominated polyisobutene-p-methylstyrene random copolymer, melt viscosity (230°C, 1200/sec) = 2500 poise) made by Exxon Mobil Chemical

Polyamide resin: Amilan CM6001 made by Toray (Nylon 6, 66 copolymer resin), melt viscosity (230°C, 1200/sec = 2000 poise)

The halogenated rubber was modified in the following way. Note that the substitution rate was as shown in Table I.

End carboxylated polyisobutene substitution: The end of the polyisobutene was modified by an acid anhydride, then the ring opened by methanol to obtain a carboxylated polyisobutene. The end carboxylated polyisobutene thus obtained and Br-IPMS were mixed in a kneader (100°C, 50 rpm) for 1 hour to obtain a modified rubber having the halogen positions substituted with carboxylated polyisobutene.

Aminotriazole substitution: 3-amino-1,2,4-triazole and Br-IPMS were mixed in a kneader (100°C, 50 rpm) for 1 hour to obtain a modified rubber with the halogen positions substituted with aminotriazole.

Stearylamine substitution: Stearylamine and Br-IPMS were mixed in a kneader (100°C, 50 rpm) for 1 hour to obtain a modified rubber with the halogen positions substituted with stearylamine.

| Formulation of Halogenated Rubber Composition | |
|---|---|
| Ingredients | Parts by weight |
| Modified or unmodified Br-IPMS<br>Zinc oxide (Zinc White No. 3, made by Seido Chemical Industry)<br>Stearic acid<br>Zinc stearate | 100<br>0.5<br>1<br>2 |
| Formulation of Polyamide | |
| Polyamide alone was used | |

Preparation of Test Samples

First, the rubber component of Table I was mixed using a closed type mixer, then extruded into strands and pelletized. Next, the matrix resin component and the rubber component were dry blended, then charged from a first charging port of a TEX 44 twin-screw extruder made by JSW (i.e., Japan Steal Works) and melted and mixed at 230°C for about 10 minutes. The kneaded material thus obtained was extruded in strands from the front end of a twin-screw extruder. These were cooled, then pelletized by a pelletizer. The pelletized mixed substance was melted in a 40 mm φ resin-use single-screw extruder having a T-die at a rotational speed of 40 rpm at 230°C and formed into a sheet having a width of 350 mm and a thickness of 100 μm.

The test methods used for the evaluation in the Examples and Comparative Examples were as follows:

Capillary Viscosity

Here, the "capillary viscosity" means the melt viscosity at any temperature and component during mixing. The melt viscosities of rubber and polymer materials are dependent on the temperature, shear rate (sec$^{-1}$) and shear stress, and therefore, the stress and shear rate of the rubber and polymer materials at any temperature in the molten state where they flow through the capillary tube, in particular the temperature region during mixing, are measured and the viscosity measured by the following formula (1). Note that the capillary viscosity is measured using a capillary rheometer, Capillograph 1C, made by Toyo Seiki.

$$\eta = \delta/\dot{\gamma} \qquad\qquad (1)$$

where, $\delta$: shear strength, $\dot{\gamma}$: shear rate

Low Temperature Constant Strain Test

A rubber-based cement comprising the following formulation was brushed on a thermoplastic elastomer composition film and dried to deposit a tire carcass rubber comprising the following rubber formulation. This was vulcanized at 180°C for 10 minutes to prepare a 2 mm thick film/rubber laminate. This was punched out to a JIS (i.e., Japanese Industrial Standard) No. 2 dumbbell shape which was then used for a durability test at a cycle of 5 Hz while applying strain of 30.6% at -20°C.

| Rubber-Based Cement Formulation | |
|---|---|
| Ingredients | Parts by weight |
| Natural rubber (RSS#3) | 80 |
| SBR (Nipol 1502, Nippon Zeon) | 20 |
| FEF carbon black (HTC#100, Chubu Carbon) | 50 |
| Stearic acid (Beads Stearic Acid NY, NOC) | 2 |
| ZnO (No. 3 Zinc Oxide) | 3 |
| Sulfur (powdered sulfur, Karuizawa Refinery) | 3 |
| Vulcanization accelerator (BBS, N-t-butyl-2-benzothiazylsulfenamide) | 1 |
| Aromatic oil (Desolex No. 3, Showa Shell Sekiyu) | 2 |
| Hexamethoxymethylated melamine (CYREZ964RPC, Mitsui Cytec) | 5 |
| Resorcine-formaldehyde resin (Penacolite Resin B-18-S, Indspec Chemical) | 10 |
| Phenol-formaldehyde resin (Hitanol 1502Z, Hitachi Kasei Kogyo) | 1 |
| Toluene | 1000 |

| Tire-Use Carcass Rubber Formulation | |
|---|---|
| | Parts by weight |
| Natural rubber (RSS#3) | 80 |
| SBR (Nipol 1502, Nippon Zeon) | 20 |
| FEF carbon black (HTC#100, Chubu Carbon) | 50 |
| Stearic acid (Beads Stearic Acid NY, NOC) | 2 |
| ZnO (No. 3 Zinc Oxide) | 3 |
| Sulfur (powdered sulfur, Karuizawa Refinery) | 3 |
| Vulcanization accelerator (BBS, N-t-butyl-2-benzothiazylsulfenamide) | 1 |
| Aromatic oil (Desolex No. 3, Showa Shell Sekiyu) | 2 |

Method of Measurement of Amount of Air Permeation (Air Permeation Coefficient)

Based on JIS K 7126 "Test Method of Air Permeation of Plastic Films and Sheets (Method A)" (unit: $cm^3 \cdot cm/cm^2 \cdot sec \cdot cmHg$)

Test piece: Film samples prepared in examples used
Test gas: Air ($N_2:O_2 = 8:2$)
Test temperature: 30°C

Method of Measurement of Dispersed Phase Size

The film was cut into ultrathin sections using a microtome, then dyed by $RuO_4$ etc. and directly examined using a transmission electron microscope (Hitachi H-800). The results are shown in Table I.

Table I

| | Comp. Ex. 1 | Ex. 1 | Ex. 2 | Ex. 3 |
|---|---|---|---|---|
| Halogenated rubber | Br-IPMS*1 | Br-IPMS*1 | Br-IPMS*1 | Br-IPMS*1 |
| Substituent group | None | End-carboxylated polyisobutene | Aminotriazole | Stearyl amine |
| Substituent group introduction rate*2 | – | 20% | 10% | 10% |
| Capillary viscosity (poise) | 2500 | 2900 | 3400 | 3800 |
| Maximum rubber formulation ratio*3 | 55% | 59% | 62% | 65% |
| Low temperature constant strain test | 5,200,000 | 6,000,000 | 6,800,000 | 7,100,000 |
| Dispersed phase size | 0.5 $\mu$m | 0.7 $\mu$m | 0.6 $\mu$m | 0.5 $\mu$m |
| Air permeation coefficient ($cm^3 \cdot cm/cm^2 \cdot sec \cdot cmHg$) | $13 \times 10^{-12}$ | $15 \times 10^{-12}$ | $16 \times 10^{-12}$ | $18 \times 10^{-12}$ |

*1. Brominated polyisobutene-p-methylstyrene random copolymer

*2. Substitution ratio of bromine portion in brominated rubber

*3. Maximum formulation ratio of rubber capable of maintaining phase separation state where polyamide forms continuous phase and Br-IPMS forms dispersed phase

EP 1 275 692 A1

As shown in the results of Table I, according to the present invention, the modified halogenated rubber is increased in viscosity at a high temperature compared with a non-substituted rubber. As a result, an increase in the amount of rubber blended in a blend with a thermoplastic resin, and a thermoplastic elastomer greatly improved in low temperature durability and maintaining the air barrier property is obtained.

**Claims**

1. A modified halogenated rubber comprising a halogenated rubber substituted with (i) a chain polymer having a carboxyl group or amino group at the end thereof and having a weight average molecular weight of at least 1000 or (ii) a non-polymer compound having a carboxyl group or amino group and having intermolecular interaction, wherein at least 5% of a halogen portion of the halogenated rubber is substituted.

2. A modified halogenated rubber as claimed in claim 1, wherein said intermolecular interaction is a hydrogen bond, ionic interaction, or ionic bond.

3. A modified halogenated rubber as claimed in claim 1 or 2, wherein said halogenated rubber is a brominated polyisobutene-p-methylstyrene random copolymer.

4. A thermoplastic elastomer composition comprising (A) a modified halogenated rubber according to claim 1 as a dispersed phase and (B) a thermoplastic resin as a continuous phase, an amount of modified halogenated rubber (A) being at least 50% by weight of the total weight of the components (A) and (B).

5. A pneumatic tire comprising a thermoplastic elastomer composition according to claim 4 as an air barrier layer.

**European Patent Office**

**EUROPEAN SEARCH REPORT**

Application Number

EP 02 01 3582

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2001/007892 A1 (MINAGAWA YASUHISA ET AL) 12 July 2001 (2001-07-12) <br> * abstract; claims 1-9 * <br> * page 1, line 0003 * <br> * page 4, line 0046; table EMB1 * | 1-3 | C08L23/28 <br> B60C1/00 |
| X <br> Y | US 5 162 445 A (CHUNG T-C ET AL) 10 November 1992 (1992-11-10) <br> * the whole document * | 1-3 <br> 4,5 | |
| D,Y | DATABASE WPI <br> Section Ch, Week 199648 <br> Derwent Publications Ltd., London, GB; <br> Class A14, AN 1996-414335 <br> XP002209769 <br> & JP 08 244402 A (YOKOHAMA RUBBER CO LTD), 24 September 1996 (1996-09-24) <br> * the whole document * | 4,5 | |
| X | WO 97 47664 A (EXXON CHEMICAL PATENTS INC) 18 December 1997 (1997-12-18) <br> * abstract; claims 1-20 * <br> * page 1, line 10-17 * <br> * page 3, line 15-31 * <br> * page 4, line 1-30 * <br> * page 5, line 18-25 * <br> * page 6, line 8-25 * <br> * page 7, line 14-31 * <br> * page 8, line 1-5 * | 1-3 | TECHNICAL FIELDS SEARCHED (Int.Cl.7) <br><br> C08L <br> B60C |

The present search report has been drawn up for all claims

| Place of search | Date of completion of the search | Examiner |
|---|---|---|
| THE HAGUE | 14 August 2002 | Bergmans, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**      EP 02 01 3582

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2002

| Patent document cited in search report | | Publication date | Patent family member(s) | | Publication date |
|---|---|---|---|---|---|
| US 2001007892 | A1 | 12-07-2001 | EP | 0819732 A2 | 21-01-1998 |
| | | | JP | 10081784 A | 31-03-1998 |
| US 5162445 | A | 10-11-1992 | US | 5430118 A | 04-07-1995 |
| | | | US | 5426167 A | 20-06-1995 |
| | | | US | 5459174 A | 17-10-1995 |
| | | | US | 5548023 A | 20-08-1996 |
| | | | US | 5548029 A | 20-08-1996 |
| | | | US | 5567775 A | 22-10-1996 |
| | | | US | 5824717 A | 20-10-1998 |
| | | | US | 6013727 A | 11-01-2000 |
| | | | US | 5959049 A | 28-09-1999 |
| | | | AU | 612845 B2 | 18-07-1991 |
| | | | AU | 3521989 A | 30-11-1989 |
| | | | BR | 8902417 A | 16-01-1990 |
| | | | CA | 1338546 A1 | 20-08-1996 |
| | | | DE | 68929339 D1 | 13-12-2001 |
| | | | DE | 68929339 T2 | 25-07-2002 |
| | | | EP | 0344021 A2 | 29-11-1989 |
| | | | ES | 2167305 T3 | 16-05-2002 |
| | | | JP | 2150408 A | 08-06-1990 |
| | | | JP | 2796993 B2 | 10-09-1998 |
| | | | KR | 147373 B1 | 17-08-1998 |
| | | | US | 5654379 A | 05-08-1997 |
| | | | AT | 143981 T | 15-10-1996 |
| | | | AU | 4658389 A | 28-04-1991 |
| | | | BR | 8907906 A | 21-07-1992 |
| | | | BR | 8907907 A | 21-07-1992 |
| | | | CA | 2003738 A1 | 03-04-1991 |
| | | | CA | 2009681 A1 | 03-04-1991 |
| | | | DE | 68927328 D1 | 14-11-1996 |
| | | | DE | 68927328 T2 | 20-02-1997 |
| | | | EP | 0497758 A1 | 12-08-1992 |
| | | | EP | 0501957 A1 | 09-09-1992 |
| | | | ES | 2092502 T3 | 01-12-1996 |
| | | | JP | 2957006 B2 | 04-10-1999 |
| | | | JP | 5500232 T | 21-01-1993 |
| | | | JP | 3259054 B2 | 18-02-2002 |
| | | | KR | 154878 B1 | 01-12-1998 |
| | | | WO | 9107451 A1 | 30-05-1991 |
| | | | WO | 9104992 A1 | 18-04-1991 |
| JP 8244402 | A | 24-09-1996 | JP | 3126286 B2 | 22-01-2001 |
| | | | DE | 69602785 D1 | 15-07-1999 |
| | | | DE | 69602785 T2 | 11-11-1999 |
| | | | EP | 0732224 A1 | 18-09-1996 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 02 01 3582

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2002

| Patent document cited in search report | | Publication date | Patent family member(s) | | Publication date |
|---|---|---|---|---|---|
| JP 8244402 | A | | US | 6079466 A | 27-06-2000 |
| WO 9747664 | A | 18-12-1997 | AT | 408886 B | 25-03-2002 |
| | | | AT | 905897 A | 15-08-2001 |
| | | | BR | 9709779 A | 10-08-1999 |
| | | | CA | 2256513 A1 | 18-12-1997 |
| | | | CN | 1221430 A | 30-06-1999 |
| | | | CZ | 9804053 A3 | 17-11-1999 |
| | | | DE | 69709095 D1 | 24-01-2002 |
| | | | DE | 69709095 T2 | 25-04-2002 |
| | | | EP | 0904303 A1 | 31-03-1999 |
| | | | ES | 2165068 T3 | 01-03-2002 |
| | | | HU | 9902764 A2 | 28-12-1999 |
| | | | JP | 2000508368 T | 04-07-2000 |
| | | | PL | 330595 A1 | 24-05-1999 |
| | | | TW | 464665 B | 21-11-2001 |
| | | | WO | 9747664 A1 | 18-12-1997 |
| | | | US | 5912302 A | 15-06-1999 |

EPO FORM P0459

For more details about this annex : see Official Journal of the European Patent Office, No. 12/82